# EUROPÄISCHE PATENTSCHRIFT

(11) **EP 3 966 468 B1**
(45) Veröffentlichungstag und Bekanntmachung des Hinweises auf die Patenterteilung: **08.03.2023**
(21) Anmeldenummer: 20725079.6
(22) Anmeldetag: 01.04.2020
(51) Int. Cl.: F16D 65/12

(54) **FAHRZEUGBREMSSCHEIBE**
VEHICLE BRAKE DISC
DISQUE DE FREIN DE VÉHICULE

(30) Priorität: 09.05.2019 DE 102019112203
(43) Veröffentlichungstag der Anmeldung: 16.03.2022
(73) Patentinhaber: Bayerische Motoren Werke Aktiengesellschaft, 80809 München (DE)
(72) Erfinder: KOKOTT, Kordian, 85435 Erding (DE); WALTHER, Florian, 81679 München (DE)
(86) Internationale Anmeldenummer: PCT/EP2020/059277
(87) Internationale Veröffentlichungsnummer: WO 2020/224875

(56) Entgegenhaltungen:
- EP-A1- 0 872 659
- DE-A1- 3 902 657
- DE-A1-102008 035 750
- DE-A1-102017 210 451

## Beschreibung

Die Erfindung betrifft eine Verbund-Bremsscheibe für ein Kraftfahrzeug, nach dem Oberbegriff des ersten Anspruchs. Verbund-Bremsscheiben sind mit einem Rad koaxial montierte Bestandteile eines Bremssystems für Kraftfahrzeuge, welche einen Reibring und einen Bremsscheibentopf aufweisen. Der Bremsscheibentopf dient dabei der Befestigung der Bremsscheibe an einer Radnabe, während der Reibring während des Bremsvorganges in tribologischen Kontakt mit den Bremsbelägen des Bremssystems gebracht wird. Hierdurch wird die kinetische Energie des Kraftfahrzeuges in Form von Reibungswärme abgebaut, das Fahrzeug wird abgebremst.

Solche Bremsscheiben können mehrteilig gefertigt werden, wobei die größten Beanspruchungen an das Material des Reibringes gerichtet sind. Reibringe werden daher in der Regel als Gussbauteile, insbesondere in GG-15 oder GG-25, ausgeführt. Zur Abfuhr der beim Bremsvorgang entstehenden Wärme aus dem Reibring sind solche Reibringe häufig in Form innenbelüfteter Reibringe gestaltet, das heißt, sie sind mit Kanälen oder Bohrungen versehen, welche mit Luft durchströmt sind, um so die Wärmeabfuhr aus dem Reibring zu verbessern.

Eine solche Bremsscheibe, bei welcher der Reibring getrennt vom Bremsscheibentopf gefertigt und danach mit diesem geeignet verbunden wird, hat den Vorteil, dass der Reibring einerseits und der Bremsscheibentopf andererseits aus den für die jeweiligen Anforderungen günstigsten Materialien gefertigt sein kann. Hierdurch kann beispielsweise zum einen eine Gewichtsersparnis erzielt werden, und zum anderen ist damit eine vorteilhafte Entkoppelung zwischen dem Reibring und dem Bremsscheibentopf möglich.

Die DE 39 02 657 A1 beschreibt eine Bremsscheibe für Schienenfahrzeuge, die dadurch gekennzeichnet ist, dass eine Nabe der Bremsscheibe auf einer RadsatzWelle aufgepresst ist, die an einem Teil ihrer Außenfläche einen belüfteten Reibring trägt. Dieser ist mittels mittig an seinem Innenumfang verteilt angeordneter, radialer Spannhülsen, an einem axial außen ausgebildeten Kragen der Nabe befestigt und die Spannhülsen sind durch Querstifte gegen Radialverschiebungen gesichert.

Eine solche Ausführung einer Bremsscheibe hat den Nachteil, dass Spannhülsen mit diese durchsetzenden Querstiften in Kühlkanälen angeordnet sind und viel weniger Belüftung erlauben als Kühlkanäle ohne Spannhülsen, was eine ungleichmäßige Kühlung des Reibrings bewirkt. Außerdem findet eine radiale Ausdehnung von Nabe und Reibring aufgrund deren Erwärmung durch das Bremsen auch gerade im Bereich der Spannhülse statt, was zu einer Relativbewegung zwischen dieser und Nabe und Reibring führen kann, eventuell sogar mit abrasivem Verschleiß.

Deshalb ist es Aufgabe der vorliegenden Erfindung, bei einer Bremsscheibe für eine Scheibenbremse für Kraftfahrzeuge, durch eine geeignete Verbindung und Gestaltung von Reibring und Bremsscheibentopf, die Verbindungsmittel so anzuordnen, dass deren Platzbedarf möglichst wenig Einfluss auf eine gleichmäßige Kühlung der Bremsscheibe hat. Es soll eine solche Verbindung zwischen Bremsscheibentopf und Reibring bereitgestellt werden, die bei Erhitzung durch das Bremsen, die Bremsscheibe bezüglich einer Reduktion des inneren Spannungsaufbaus weiter verbessert, insbesondere soll möglichst keine Relativbewegung zwischen den Verbindungsmitteln und der Oberfläche ihrer Einsatzbohrungen in Reibring und Bremsscheibentopf stattfinden. Außerdem soll die Bremsscheibe leicht und kostengünstig montierbar sein.

Die Aufgabe wird erfindungsgemäß mit den Merkmalen des Anspruchs 1 und den Verfahrensschritten des Anspruchs 13 gelöst. Weitere Ausgestaltungen der Erfindung ergeben sich aus den abhängigen Ansprüchen.

Nach der Erfindung ist eine Scheibenbremse für ein Kraftfahrzeug, mit einer innenbelüfteten Bremsscheibe, wenigstens bestehend aus einem Reibring mit einer außen liegenden Reibfläche auf je einer von zwei Reibringhälften, die durch zwischen diesen liegenden Rippen verbunden sind, die zwischen den Reibringhälften Kühlkanäle ausbilden und bestehend aus einem mit dem Reibring über radial gerichtete Verbindungsmittel, insbesondere Spannhülsen, Passstifte mit Durchgangsbohrung oder Blindniete, verbundenen Bremsscheibentopf, der an seinem Mantel einen sich in radialer Richtung erstreckenden Kragen besitzt, der mit einer Außenumfangsfläche an einem Außendurchmesser, mit einer Innenumfangsfläche an einem Innendurchmesser des Reibrings eine Passung bildet und radial gerichtete erste Bohrungen besitzt in die die Verbindungsmittel so eingebracht sind, dass diese sich weiter in ebenfalls radial gerichtete zweite Bohrungen im Reibring, in diesen hinein, erstrecken, dadurch gekennzeichnet, dass der Bremsscheibentopf die Passung mit einer einzigen Reibringhälfte bildet und diese nach innen, zu den Kühlkanälen oder zu den Rippen hin, Material - Ausbuchtungen aufweist, an den Stellen, an denen die zweiten Bohrungen zur teilweisen Aufnahme der Verbindungsmittel eingebracht sind.

Eine ausschließliche Verbindung von Bremsscheibentopf und Reibring an einer einzigen Reibringhälfte hat den Vorteil, dass die Kühlung der einzelnen Kühlkanäle gleichmäßiger gestaltet werden kann, da die Kühlkanäle, die durch die Platzierung der Verbindungsmittel betroffen sind, nicht ausschließlich durch deren hohl ausgebildetes Zentrum belüftet sind, sondern ein Teil des Kühlkanalquerschnitts zusätzlich zur Durchströmung mit Luft freigehalten werden kann. Die Verbindungsmittel können bei einer solchen Befestigung seitlich so platziert werden, dass wenigstens eine Hälfte des Kühlkanalquerschnitts zur Durchströmung offen bleiben kann und so der Kühlkanal mit Kühlluft, vom Innendurchmesser des Reibrings her, sowohl durch das jeweilige Verbindungsmittel, als auch über den Kühlkanaleinlass versorgt wird. Dazu weist vorteilhafterweise die, die einzige Passung zum Bremsscheibentopf bildende Reibringhälfte, nach innen, zu den Kühlkanälen oder zu den Rippen hin, Material - Ausbuchtungen auf, an den Stellen, an denen die zweiten Bohrungen für die Verbindungsmittel eingebracht sind. Eine Gestaltung der Material-Ausbuchtungen so, dass in deren Querschnitt konstante Wanddicken vorhanden sind, die mittels Radien ineinander übergehen, bewirkt vorteilhafterweise eine günstige Spannungsverteilung bei Erhitzung durch das Bremsen und bei nachfolgender Abkühlung durch den Konstantquerschnitt der Wandung von Reibscheibe und Bremsscheibentopf im Bereich der Material-Ausbuchtungen zur Platzierung der Verbindungsmittel.

Dazu ist auch vorteilhaft, dass die zweiten Bohrungen für die Verbindungsmittel an ihrem radial außen liegenden Ende einen Auslasskanal zur Entlüftung in einen Kühlkanal besitzen. Der Innendurchmesser des Auslasskanals sollte dann bevorzugt wenigstens den Innendurchmesser eines montierten Verbindungsmittels besitzen. Dieser Auslasskanal kann bei der Herstellung im gleichen Arbeitsschritt gebohrt werden, mit der ersten und der zweiten Bohrung, zum Beispiel mit einem Stufenbohrer. Alternativ dazu ist es auch möglich, zur Herstellung der ersten und der zweiten Bohrung und des Auslasskanals ein Folgeverbundwerkzeug zu verwenden. Bei beiden Herstellungsverfahren werden Reibring und Bremsscheibentopf nur einmal zueinander zentriert und dann werden vorteilhafterweise alle Bohrungen für die Verbindungsmittel, also erste und zweite Bohrung und die des Auslasskanals eingebracht, insbesondere pro Verbindungsmittel in einem Arbeitsschritt oder mittels eines Folgeverbundwerkzeugs.

Als hohl ausgebildete Verbindungsmittel zwischen Bremsscheibentopf und Reibring, genauer gesagt, einziger Reibringhälfte, sind bevorzugt Spannhülsen oder Blindniete oder Passstifte mit axial gerichteter Durchgangsbohrung vorgesehen.

Bevorzugte Ausführungsformen der Erfindung sind dadurch gekennzeichnet, dass die, die Passung zum Bremsscheibentopf bildende, einzige Reibringhälfte, in Axialrichtung der Bremsscheibe gesehen, die ist, die in Richtung eines Topfbodens des Bremsscheibentopfs liegt. Wenn dann die Passung zwischen Bremsscheibentopf und Reibringhälfte eine Übermaßpassung oder eine Übergangspassung (nach ISO 286) ist und der Innendurchmesser der mit dieser versehenen Reibringhälfte kleiner ist als der Innendurchmesser der Reibringhälfte ohne Passung, kann ein Herstellen von korrespondierenden Passungsflächen am Kragen des Bremsscheibentopfs und an der Reibringhälfte mit dem kleinsten Innendurchmesser, die, in Axialrichtung der Bremsscheibe gesehen, in Richtung des Topfbodens des Bremsscheibentopfs liegt, auf einfache Weise bewerkstelligt werden, ebenso ein Einpressen des Bremsscheibentopfs in den Reibring, im Falle der Verwendung einer Presspassung, zur Montage des Passungssitzes, in Axialrichtung der Bremsscheibe, mit dem Topfboden voraus, von der Seite des Reibrings her mit der Reibringhälfte ohne Passung, aufgrund deren größeren Innendurchmessers. Besonders einfach zu bewerkstelligen ist das Beenden des Einpressens des Bremsscheibentopfs in den Reibring, bei Erreichen von Formgleichheit zwischen Reibring und Bremsscheibentopf an der Innenseite der Reibringhälfte mit Passung, in Axialrichtung der Bremsscheibe gesehen.

Weitere vorteilhafte Ausführungsformen der Erfindung sind dadurch gekennzeichnet, dass der Bremsscheibentopf aus Stahl oder aus einem Nichtmetallwerkstoff oder bevorzugt aus Leichtmetall besteht. Bei letzterem Werkstoff ergibt sich eine besonders große Gewichtseinsparung gepaart mit preiswerten Herstellungsverfahren durch Tiefziehen oder Fließpressen oder Biegen oder Gießen. Gerade diese Herstellverfahren gewährleisten beim Bremsscheibentopf, in Zusammenhang mit den beanspruchten Werkstoffen für diesen und mit dem Aufbau der Bremsscheibe, dass auch bei einer großen Aufheizung der Bremsscheibe durch Reibungswärme beim Bremsen, sich trotz der entstehenden Materialvolumenausdehnung mit unterschiedlichen thermischen Ausdehnungskoeffizienten von Bremsscheibentopf und Reibring, deren Passungsverbindung erhalten bleibt und vorwiegend der Bremsscheibentopf mit seiner Elastizität die radiale Ausdehnung ausgleicht. Deshalb findet vorteilhafterweise keine Relativbewegung im Bereich der Verbindungsmittel statt, was das Entstehen von abrasivem Verschleiss an diesen und am Innenumfang der ersten und der zweiten Bohrung verhindert.

Schwingungstechnisch ist es zusätzlich auch noch günstig, wenn die Anzahl der Verbindungsmittel und damit der Material-Ausbuchtungen über den Bremsscheibenumfang einer Primzahl oder einer geraden Zahl entspricht.

Ein besonders bevorzugtes Verfahren zum Herstellen einer Bremsscheibe ist gekennzeichnet durch die Verfahrensschritte
- Herstellen von korrespondierenden Passungsflächen am Außendurchmesser des Kragens des Bremsscheibentopfs und am Innendurchmesser der Reibringhälfte, die, in Axialrichtung der Bremsscheibe gesehen, sich näher am Topfboden des Bremsscheibentopfs befindet;
- Einpressen des Bremsscheibentopfs in die Reibringhälfte, in Axialrichtung der Bremsscheibe, insbesondere mit dem Topfboden voraus, von der Seite des Reibrings her, mit der Reibringhälfte ohne Passung;
- Beenden des Einpressens des Bremsscheibentopfs in die Reibringhälfte bei Erreichen von Formgleichheit zwischen der Innenseite von Reibringhälfte mit Passung und Bremsscheibentopfkragen, in Axialrichtung der Bremsscheibe gesehen, auf die Innenseite der Reibringhälfte mit Passung;
- Bohren der ersten und zweiten Bohrungen wenigstens jeweils in einem Arbeitsgang pro Bohrungspaar aus erster und zweiter Bohrung und Bohren des Auslasskanals;
- Einbringen jeweils eines Verbindungsmittels in jedes Bohrungspaar aus erster und zweiter Bohrung.

Vorteilhafterweise, bei Umformung des Bremsscheibentopfs mit nachfolgender Verbindung mit dem Reibring, wird das auf der Oberfläche des Bremsscheibentopfs verbleibende Schmiermittel aus der Umformung, zum Beispiel das Tiefziehöl, nachfolgend auch als Schmiermittel für das Fügen der Übergangs- bzw. Übermaßpassung verwendet.

Sehr vorteilhaft wirkt sich bei den Verbindungsmitteln, insbesondere bei der Verwendung von Spannhülsen, gegen deren Verlagerung aus, wenn diese nach ihrem Einbringen in jedes Bohrungspaar dort verstemmt werden. Allerdings kann auch ein Einbringen jeweils eines Sprengringes oder Federrings am radial inneren Ende in die ersten Bohrungen zur Sicherung der Lage der Verbindungsmittel dienen. Alternativ dazu ist auch möglich, mit einem einzigen Spannring, platziert im Innenumfang des Mantels des Bremsscheibentopfs, auf Höhe des Bohrungskreises der ersten Bohrungen, alle Verbindungsmittel in ihrer Lage zu sichern.

Die Verbindungsmittel können in Umfangsrichtung eine Struktur zur besseren Kraftübertragung aufweisen, zum Beispiel eine Riffelung oder ein Rillenprofil, was dann einen Formschluss erzeugt zwischen Reibring und Bremsscheibentopf in Axialrichtung der Verbindungsmittel, zusätzlich zum Formschluss in Umfangsrichtung der Bremsscheibe durch die Verbindungsmittel und zum Reibschluss in Umfangsrichtung der Bremsscheibe durch die Übergangs- bzw. Übermaßpassung.

Ein bevorzugtes Ausführungsbeispiel der vorliegenden Erfindung einer Bremsscheibe und des Verfahrens ihrer Herstellung ist in der beigefügten Zeichnung schematisch dargestellt. Erfindungswesentlich können sämtliche beschriebenen Merkmale sein. Es zeigen:
- Fig.1:: eine erfindungsgemäße Bremsscheibe in einem radial gerichteten Teilquerschnitt mit einer Spannhülse als Verbindungsmittel und
- Fig.2:: ein Ausschnitt aus der Bremsscheibe nach Figur 1 als vergrößerte Teilansicht auf die Passungsfläche des Reibrings in radialer Richtung, auf einen Bereich zweier, nebeneinander liegender, radial gerichteter, zweiter Bohrungen für zwei nicht gezeichnete Spannhülsen an der Trennfläche zwischen Reibring und Bremsscheibentopf.

Die in den Figuren teilweise dargestellte Bremsscheibe 1 einer Scheibenbremse für ein Kraftfahrzeug, besteht aus einem Bremsscheibentopf 3 und einem Reibring 2 und ist für eine Montage an einer nicht gezeichneten Radnabe vorgesehen, zur Rotation mit dieser. Der einstückige, innengekühlte bzw. -belüftete und in Grauguss gefertigte Reibring 2 besteht aus zwei Reibringhälften 2`, 2" mit je einer außen liegenden Reibfläche 4`, 4" und zwischen den Reibringhälften 2`, 2" liegenden, diese auf deren Innenseite miteinander verbindenden, Kühlkanäle 6 einer Kühlluftführung durch den Reibring 2 bildenden, Rippen 5. Die, in Axialrichtung betrachtet, d.h. in Richtung einer Drehachse D der Bremsscheibe 1, näher am Bremsscheibentopf 3 liegende ringförmige Reibringhälfte 2`, erstreckt sich in Radialrichtung R (bezüglich der Drehachse D) gesehen, mit einem sogenannten Befestigungsfortsatz 7 um ein bestimmtes Maß weiter zur Drehachse D hin, als die andere in Axialrichtung weiter vom Bremsscheibentopf 3 entfernte Reibringhälfte 2".

Eine Innenumfangsfläche 7` des Befestigungsvorsatzes 7 der Reibringhälfte 2` bildet mit einer Außenumfangsfläche 9' des Bremsscheibentopfs 3 eine Passung und beide, Reibringhälfte 2' und Bremsscheibentopf 3 sind zusätzlich miteinander über radial gerichtete, geschlitzte Spannhülsen 8 verbunden, die in einen Kragen 9 am Mantel 10 in radial gerichtete erste Bohrungen 16 eingebracht sind und sich von dort weiter in ebenfalls radial gerichtete, koaxiale zweite Bohrungen 17 in der Reibringhälfte 2`, in diese hinein, erstrecken. Dabei liegt die, die Passung zum Bremsscheibentopf 3 bildende Reibringhälfte 2`, in Axialrichtung der Bremsscheibe gesehen, näher in Richtung eines Topfbodens 11 des Bremsscheibentopfs 3 und die Anzahl der zur Verbindung von Reibscheibe 2' und Bremsscheibentopf 3 verwendeten Spannhülsen 8 über den Bremsscheibenumfang entspricht einer Primzahl oder einer geraden Zahl.

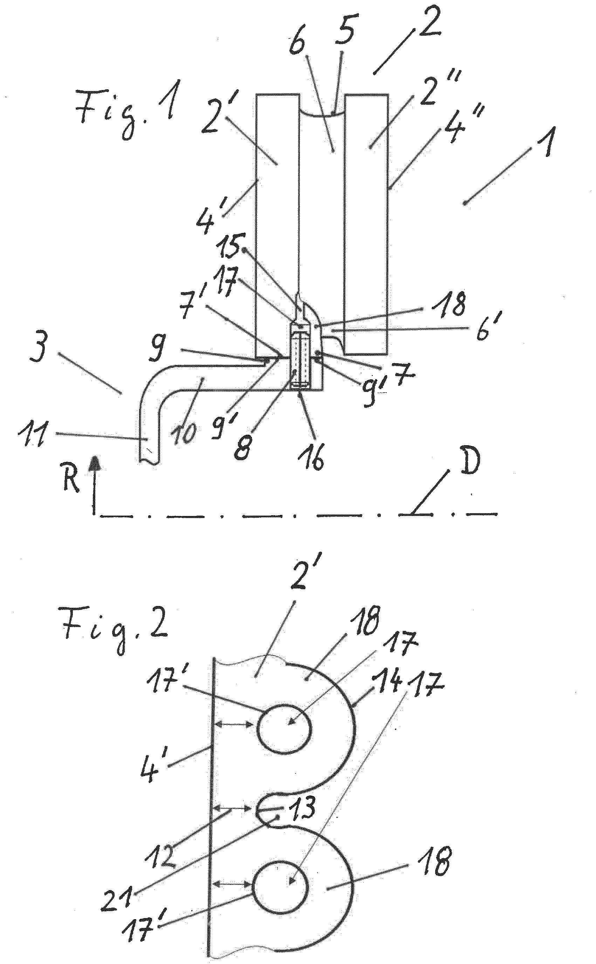

Auf ihrer Kühlkanalseite wird die Reibringhälfte 2' zur Platzierung der Spannhülsen 8 aufgedickt, indem sie, nach innen, je nach Lage der Spannhülsen 8, zu den Kühlkanälen 6 oder zu den Rippen 5 hin, Material - Ausbuchtungen 18 aufweist, an den Stellen, an denen die zweiten Bohrungen 17 für die Spannhülsen 8 eingebracht sind. Dabei sind die Material-Ausbuchtungen 18 so gestaltet, dass in deren Querschnitt konstante Wanddicken (Figur 2, Pfeile 12) vorhanden sind, die über Radien 13, 14 ineinander übergehen. Dadurch wird der durch die ersten und zweiten Bohrungen 16, 17 geschwächte Querschnitt von Bremsscheibentopf 3 und Reibscheibenhälfte 2' mittels Wandeinsenkungen 21 zur besseren Spannungsverteilung konstant gehalten. Auch der Wandquerschnitt 12 der Reibringhälfte 2' zwischen deren Reibfläche 4' und den Bohrungswänden 17' der Bohrungen 17 für die Spannhülsen 8 ist gleich dem Wandquerschnitt der Reibringhälfte 2' zwischen deren Reibfläche 4' und der Wandeinsenkung 21 der Material-Ausbuchtung 18 zur Platzierung der Spannhülsen 8.

An ihrem radial außen liegenden Ende besitzen die zweiten Bohrungen 17 für die Spannhülsen 8 einen Kühlluftauslasskanal 15, der in einen Kühlkanal 6 mündet. Dadurch sind die Spannhülsen 8 luftdurchströmt. Dies ist besonders vorteilhaft zur Kühlung, wenn der Innendurchmesser des Kühlluftauslasskanals 15 wenigstens dem Innendurchmesser einer montierten Spannhülse 8 entspricht, so dass zwischen den beiden Reibringhälften 2`, 2" eine ungedrosselte Luftstromführung im Bereich der Spannhülsen 8 sowohl durch diese hindurch, als auch parallel dazu über einen noch offenen Bereich 6' des Kühlkanals 6 zwischen den Rippen 5 stattfindet, vom Inneren der Bremsscheibe 1 durch die Külkanäle 6 nach außen.

Der Bremsscheibentopf 3 besteht aus Leichtmetall oder aus Stahl oder aus einem Nichtmetallwerkstoff, das heißt als Materialien für den Bremsscheibentopf 3 kommen vorzugsweise höherfeste hochfeste Leichtmetalle (u.a. Magnesium), oder ein hochfestes, dünnwandiges Stahlblech oder Aluminium und andere Nichteisen- bzw. Nichtmetallwerkstoffe in Frage. Der Bremsscheibentopf ist daher bspw. durch ein Gussverfahren oder ein Schmiedeverfahren oder durch Fließpressen oder insbesondere durch Tiefziehen herstellbar. Bei Verwendung eines erfindungsgemäßen, in einem Leichtbaumaterial ausgeführten Bremsscheibentopfes 3 ist neben Aluminiumrädern ein Einsatz von Stahlrädern möglich.

Die Bremsscheibe wird in aufeinanderfolgenden Verfahrensschritten hergestellt durch
- Herstellen von korrespondierenden Passungsflächen einer Übermaß- oder einer Übergangspassung an einer Außenumfangsfläche 9` des Kragens 9 des Bremsscheibentopfs 3 und an einer Innenumfangsfläche 7` des Befestigungsfortsatzes 7 der Reibringhälfte 2`, die, in Axialrichtung der Bremsscheibe 1 gesehen, näher am Topfboden 11 des Bremsscheibentopfs 3 liegt;
- Einpressen oder einschieben, je nach gewählter Passung, des Bremsscheibentopfs 3 in die Reibringhälfte 2`, in Axialrichtung der Bremsscheibe 1, mit dem Topfboden 11 voraus, von der Seite des Reibrings 2 her, mit der Reibringhälfte 2" ohne Passung, deren Innendurchmesser größer ist, als der der Reibringhälfte 2' mit der Passung zum Bremsscheibentopf 3 am Befestigungsfortsatz 7;
- Beenden des Einpressens des Bremsscheibentopfs 3 in die Reibringhälfte 2' bei Erreichen von Formgleichheit zwischen der Innenseite der Reibringhälfte 2' mit Passung und dem Bremsscheibentopfkragen 9, in Axialrichtung der Bremsscheibe 1 in Einpressrichtung des Bremsscheibentopfes 3 gesehen;
- Bohren der ersten und zweiten Bohrungen 16, 17, wenigstens jeweils in einem Arbeitsgang pro Bohrungspaar aus erster und zweiter Bohrung 16, 17 und des Auslasskanals 15;
- Einbringen und Verstemmen der Spannhülsen 8 als Verbindungsmittel in die Bohrungspaare aus erster und zweiter Bohrung 16, 17.

Dadurch wird der, insbesondere tiefgezogene, Bremsscheibentopf 3 aus Leichtmetall, vorteilhafterweise leicht vorgespannt, in die Reibringhälfte 2' eingepresst. Anschließend werden Bremsscheibentopf 3 und Reibringhälfte 2' gemeinsam gebohrt und mit den Verbindungsmitteln, vorzugsweise Spannhülsen 8, verbunden, daraufhin, mittels Verstemmen, gegen Herausfallen gesichert werden. Werden als Verbindungsmittel, anstatt der Spannhülsen 8, Blindniete verwendet, entfällt der Verfahrensschritt des Verstemmens.

## Patentansprüche

1. Scheibenbremse für ein Kraftfahrzeug, mit einer innenbelüfteten Bremsscheibe (1), wenigstens bestehend aus einem Reibring (2) mit einer außen liegenden Reibfläche (4',4") auf je einer von zwei Reibringhälften (2', 2"), die durch zwischen diesen liegende Rippen (5) verbunden sind, die zwischen den Reibringhälften (2', 2") Kühlkanäle (6) ausbilden und bestehend aus einem mit dem Reibring (2) über radial gerichtete Verbindungsmittel verbundenen Bremsscheibentopf (3), der an seinem Mantel (10) einen sich in radialer Richtung erstreckenden Kragen (9) besitzt, der mit einer Außenumfangsfläche (9') an einem Außendurchmesser, mit einer Innenumfangsfläche an einem Innendurchmesser des Reibrings (2) eine Passung bildet und radial gerichtete erste Bohrungen (16) besitzt, in die die Verbindungsmittel so eingebracht sind, dass diese sich weiter in ebenfalls radial gerichtete zweite Bohrungen (17) im Reibring (2), in diesen hinein, erstrecken, **dadurch gekennzeichnet, dass** der Bremsscheibentopf (3) die Passung mit einer einzigen Reibringhälfte (2') bildet und diese nach innen, zu den Kühlkanälen (6) oder zu den Rippen (5) hin, Material - Ausbuchtungen (18) aufweist, an den Stellen, an denen die zweiten Bohrungen (17) für die Verbindungsmittel eingebracht sind.

2. Scheibenbremse nach Anspruch 1, **dadurch gekennzeichnet, dass** die, die Passung zum Bremsscheibentopf (3) bildende, einzige Reibringhälfte (2'), in Axialrichtung der Bremsscheibe (3) gesehen, die der beiden Reibringhälften (2', 2") ist, die näher an einem Topfboden (11) des Bremsscheibentopfs (3) liegt.

3. Scheibenbremse nach einem der Ansprüche 1 oder 2, **dadurch gekennzeichnet, dass** die Verbindungsmittel zwischen Bremsscheibentopf (3) und Reibringhälfte (2') Blindniete sind.

4. Scheibenbremse nach einem der Ansprüche 1 oder 2, **dadurch gekennzeichnet, dass** die Verbindungsmittel zwischen Bremsscheibentopf (3) und Reibringhälfte (2') Spannhülsen (8) sind.

5. Scheibenbremse nach einem der Ansprüche 1 oder 2, **dadurch gekennzeichnet, dass** die Verbindungsmittel zwischen Bremsscheibentopf (3) und Reibringhälfte (2') Passstifte sind, die eine zentrische Durchgangsbohrung in ihrer Axialrichtung besitzen.

6. Scheibenbremse nach einem der Ansprüche 1 bis 5, **dadurch gekennzeichnet, dass** die Verbindungsmittel in Umfangsrichtung eine Oberflächenstruktur zur besseren Kraftübertragung aufweisen, insbesondere eine Riffelung oder ein Rillenprofil.

7. Scheibenbremse nach einem der Ansprüche 1 bis 6, **dadurch gekennzeichnet, dass** die Passung zwischen Bremsscheibentopf (3) und Reibringhälfte (2`) eine Übermaßpassung ist.

8. Scheibenbremse nach einem der Ansprüche 1 bis 6, **dadurch gekennzeichnet, dass** die Passung zwischen Bremsscheibentopf (3) und Reibringhälfte (2`) eine Übergangspassung ist.

9. Scheibenbremse nach einem der Ansprüche 1 bis 8, **dadurch gekennzeichnet, dass** der Bremsscheibentopf (3) aus Leichtmetall oder aus Stahl oder aus einem Nichtmetallwerkstoff besteht.

10. Scheibenbremse nach einem der Ansprüche 1 bis 9, **dadurch gekennzeichnet, dass** die Material-Ausbuchtungen (18) so gestaltet sind, dass in deren Querschnitt konstante Wanddicken vorhanden sind, die mittels Radien (13, 14) ineinander übergehen.

11. Scheibenbremse nach einem der Ansprüche 1 bis 10, **dadurch gekennzeichnet, dass** die zweiten Bohrungen (17) für die Verbindungsmittel an ihrem radial außen liegendem Ende einen Kühlluftauslasskanal (15) in einen Kühlkanal (6) besitzen.

12. Scheibenbremse nach Anspruch 11, **dadurch gekennzeichnet, dass** der Innendurchmesser des Kühlluftauslasskanals wenigstens einem freien Innendurchmesser eines Verbindungsmittels entspricht.

13. Scheibenbremse nach einem der Ansprüche 1 bis 12, **dadurch gekennzeichnet, dass** der Innendurchmesser der Reibringhälfte (2') mit der Passung zum Bremsscheibentopf (3) kleiner ist als der Innendurchmesser der Reibringhälfte (2") ohne Passung.

14. Scheibenbremse nach einem der Ansprüche 1 bis 13, **dadurch gekennzeichnet, dass** die Anzahl der Verbindungsmittel über den Bremsscheibenumfang einer Primzahl oder einer geraden Zahl entspricht.

15. Verfahren zum Herstellen einer Bremsscheibe nach einem der Ansprüche 1 bis 14, wenigstens **gekennzeichnet durch** die Verfahrensschritte
- Herstellen von korrespondierenden Passungsflächen am Außendurchmesser des Kragens (9) des Bremsscheibentopfs (3) und am Innendurchmesser der Reibringhälfte (2'), die, in Axialrichtung der Bremsscheibe (1) gesehen, sich näher am Topfboden (11) des Bremsscheibentopfs (3) befindet;
- Einpressen des Bremsscheibentopfs in die Reibringhälfte (2'), in Axialrichtung der Bremsscheibe (1), insbesondere mit dem Topfboden (11) voraus, von der Seite des Reibrings (2) her, mit der Reibringhälfte (2") ohne Passung;
- Beenden des Einpressens des Bremsscheibentopfs (3) in die Reibringhälfte (2') bei Erreichen von Formgleichheit zwischen den Innenseite von Reibringhälfte (2`) mit Passung und Bremsscheibentopfkragen (9), in Axialrichtung der Bremsscheibe (1) gesehen, auf die Innenseite der Reibringhälfte (2') mit Passung;
- Bohren der ersten und zweiten Bohrungen (16, 17), wenigstens jeweils in einem Arbeitsgang pro Bohrungspaar aus erster und zweiter Bohrung (16, 17) und insbesondere auch des Kühlluftauslasskanals (15);
- Einbringen jeweils eines Verbindungsmittels in jedes Bohrungspaar aus erster und zweiter Bohrung (16, 17).

16. Verfahren zum Herstellen einer Bremsscheibe nach Anspruch 15, **dadurch gekennzeichnet, dass** die Verbindungsmittel Spannhülsen (8) sind, die nach ihrem Einbringen in jedes Bohrungspaar (16, 17) dort verstemmt werden.

## Claims

1. Disk brake for a motor vehicle, having an internally ventilated brake disk (1), at least consisting of a friction ring (2) with an external friction surface (4', 4") on each one of two friction ring halves (2', 2'') connected by ribs (5) which are located therebetween, form cooling channels (6) between the friction ring halves (2', 2'') and consist of a brake disk nave (3), which is connected to the friction ring (2) via radially directed connecting means and has on its casing (10) a collar (9), which extends in the radial direction, forms a fit to an external diameter of the friction ring (2) by way of an outer circumferential surface (9') and to an internal diameter of the friction ring by way of an inner circumferential surface, and has radially directed first bores (16), in which the connecting means are introduced such that they extend further into likewise radially directed second bores (17) in the friction ring (2) into the friction ring, **characterized in that** the brake disk nave (3) forms the fit with a single friction ring half (2') and this fit has material convexities (18), which point inward toward the cooling channels (6) or toward the ribs (5), at the points at which the second bores (17) are introduced for the connecting means.

2. Disk brake according to Claim 1, **characterized in that** the single friction ring half (2') forming the fit to the brake disk nave (3), as seen in the axial direction of the brake disk (3), is that one of the two friction ring halves (2', 2") which lies closer to a nave base (11) of the brake disk nave (3).

3. Disk brake according to either of Claims 1 and 2, **characterized in that** the connecting means between the brake disk nave (3) and the friction ring half (2') are blind rivets.

4. Disk brake according to either of Claims 1 and 2, **characterized in that** the connecting means between the brake disk nave (3) and the friction ring half (2') are clamping sleeves (8).

5. Disk brake according to either of Claims 1 and 2, **characterized in that** the connecting means between the brake disk nave (3) and the friction ring half (2') are locating pins, which have a central passage bore in their axial direction.

6. Disk brake according to one of Claims 1 to 5, **characterized in that** the connecting means have in the circumferential direction a surface structure for improved force transfer, in particular a corrugation or a grooved profile.

7. Disk brake according to one of Claims 1 to 6, **characterized in that** the fit between the brake disk nave (3) and the friction ring half (2') is an oversize fit.

8. Disk brake according to one of Claims 1 to 6, **characterized in that** the fit between the brake disk nave (3) and the friction ring half (2') is a transition fit.

9. Disk brake according to one of Claims 1 to 8, **characterized in that** the brake disk nave (3) consists of light metal or of steel or of a non-metal material.

10. Disk brake according to one of Claims 1 to 9, **characterized in that** the material convexities (18) are configured such that they have in their cross section constant wall thicknesses which transition into one another by means of radii (13, 14).

11. Disk brake according to one of Claims 1 to 10, **characterized in that** the second bores (17) for the connecting means have at their radially outer end a cooling-air outlet channel (15) into a cooling channel (6) .

12. Disk brake according to Claim 11, **characterized in that** the internal diameter of the cooling-air outlet channel corresponds at least to a free internal diameter of a connecting means.

13. Disk brake according to one of Claims 1 to 12, **characterized in that** the internal diameter of the friction ring half (2') which has the fit to the brake disk nave (3) is smaller than the internal diameter of the friction ring half (2") which does not have a fit.

14. Disk brake according to one of Claims 1 to 13, **characterized in that** the number of the connecting means over the brake disk circumference corresponds to a prime number or an even number.

15. Method for producing a brake disk according to one of Claims 1 to 14, at least **characterized by** the following method steps:
- producing corresponding fitting surfaces on the external diameter of the collar (9) of the brake disk nave (3) and on the internal diameter of the friction ring half (2') which, as seen in the axial direction of the brake disk (1), is located closer to the nave base (11) of the brake disk nave (3);
- pressing the brake disk nave into the friction ring half (2') in the axial direction of the brake disk (1), in particular with the nave base (11) in front, from the side of the friction ring (2) with the friction ring half (2") which does not have a fit;
- ending the pressing of the brake disk nave (3) into the friction ring half (2') when shape parity is reached between the inner side of the friction ring half (2') which has a fit and the brake disk nave collar (9), as seen in the axial direction of the brake disk (1), on the inner side of the friction ring half (2') which has a fit;
- boring the first and second bores (16, 17), at least in a respective work step per bore pair composed of a first and a second bore (16, 17), and boring in particular also the cooling-air outlet channel (15);
- introducing a respective connecting means into each bore pair composed of a first and a second bore (16, 17) .

16. Method for producing a brake disk according to Claim 15, **characterized in that** the connecting means are clamping sleeves (8), which are fixed in place in each bore pair (16, 17) after being introduced therein.

## Revendications

1. Frein à disque pour un véhicule automobile, comprenant un disque de frein (1) à ventilation interne, constitué au moins d'une bague de friction (2) dotée d'une surface de friction (4', 4") extérieure sur chacune des deux moitiés de bagues de friction (2', 2") qui sont reliées par des nervures (5), situées entre celles-ci, qui forment des canaux de refroidissement (6) entre les moitiés de bagues de friction (2', 2''), et constitué d'une nacelle de disque de frein (3) reliée à la bague de friction (2) par le biais de moyens de liaison orientés radialement, laquelle nacelle possède sur son enveloppe (10) une collerette (9) s'étendant dans la direction radiale, laquelle collerette forme un ajustement avec un diamètre extérieur de la bague de friction (2) par une surface périphérique extérieure (9'), et avec un diamètre intérieur de la bague de friction (2) par une surface périphérique intérieure et possède des premiers alésages (16) orientés radialement, dans lesquels les moyens de liaison sont introduits de telle sorte que ceux-ci s'étendent davantage dans des deuxièmes alésages (17) orientés également radialement dans la bague de friction (2), dans celle-ci, **caractérisé en ce que** la nacelle de disque de frein (3) forme l'ajustement avec une seule moitié de bague de friction (2') et cet ajustement présente des renflements de matière (18) vers l'intérieur, en direction des canaux de refroidissement (6) ou des nervures (5), aux points où les deuxièmes alésages (17) sont ménagés pour les moyens de liaison.

2. Frein à disque selon la revendication 1, **caractérisé en ce que** la seule moitié de bague de friction (2') formant l'ajustement par rapport à la nacelle de disque de frein (3), vue dans la direction axiale du disque de frein (3), est celle des deux moitiés de bague de friction (2', 2'') qui se situe plus près d'un fond (11) de la nacelle de disque de frein (3).

3. Frein à disque selon l'une des revendications 1 ou 2, **caractérisé en ce que** les moyens de liaison entre la nacelle de disque de frein (3) et la moitié de bague de friction (2') sont des rivets aveugles.

4. Frein à disque selon l'une des revendications 1 ou 2, **caractérisé en ce que** les moyens de liaison entre la nacelle de disque de frein (3) et la moitié de bague de friction (2') sont des douilles de serrage (8).

5. Frein à disque selon l'une des revendications 1 ou 2, **caractérisé en ce que** les moyens de liaison entre la nacelle de disque de frein (3) et la moitié de bague de friction (2') sont des goupilles de centrage qui possèdent un alésage traversant centré dans leur direction axiale.

6. Frein à disque selon l'une des revendications 1 à 5, **caractérisé en ce que** les moyens de liaison présentent dans la direction périphérique une structure de surface pour améliorer la transmission de force, en particulier des cannelures ou un profil rainuré.

7. Frein à disque selon l'une des revendications 1 à 6, **caractérisé en ce que** l'ajustement entre la nacelle de disque de frein (3) et la moitié de bague de friction (2') est un ajustement avec serrage.

8. Frein à disque selon l'une des revendications 1 à 6, **caractérisé en ce que** l'ajustement entre la nacelle de disque de frein (3) et la moitié de bague de friction (2') est un ajustement de transition.

9. Frein à disque selon l'une des revendications 1 à 8, **caractérisé en ce que** la nacelle de disque de frein (3) est constituée d'un métal léger ou d'acier ou d'une matière non métallique.

10. Frein à disque selon l'une des revendications 1 à 9, **caractérisé en ce que** les renflements de matière (18) sont configurés de telle sorte que des épaisseurs de paroi constantes dans leur section transversale sont présentes, lesquelles épaisseurs se prolongent les unes dans les autres au moyen de rayons (13, 14).

11. Frein à disque selon l'une des revendications 1 à 10, **caractérisé en ce que** les deuxièmes alésages (17) pour les moyens de liaison possèdent, à leur extrémité radialement extérieure, un canal de sortie d'air de refroidissement (15) dans un canal de refroidissement (6) .

12. Frein à disque selon la revendication 11, **caractérisé en ce que** le diamètre intérieur du canal de sortie d'air de refroidissement correspond au moins à un diamètre intérieur libre d'un moyen de liaison.

13. Frein à disque selon l'une des revendications 1 à 12, **caractérisé en ce que** le diamètre intérieur de la moitié de bague de friction (2') présentant l'ajustement par rapport à la nacelle de disque de frein (3) est inférieur au diamètre intérieur de la moitié de bague de friction (2'') sans ajustement.

14. Frein à disque selon l'une des revendications 1 à 13, **caractérisé en ce que** le nombre de moyens de liaison sur la circonférence du disque de frein correspond à un nombre premier ou à un nombre pair.

15. Procédé de fabrication d'un disque de frein selon l'une des revendications 1 à 14, au moins **caractérisé par** les étapes de procédé suivantes :
- fabrication de surfaces d'ajustement correspondantes au niveau du diamètre extérieur de la collerette (9) de la nacelle de disque de frein (3) et au niveau du diamètre intérieur de la moitié de bague de friction (2') qui, vue dans la direction axiale du disque de frein (1), se situe plus près du fond (11) de la nacelle de disque de frein (3) ;
- enfoncement de la nacelle de disque de frein dans la moitié de bague de friction (2'), dans la direction axiale du disque de frein (1), en particulier avec le fond de nacelle (11) à l'avant, à partir du côté de la bague de friction (2) présentant la moitié de bague de friction (2'') sans ajustement ;
- achèvement de l'enfoncement de la nacelle de disque de frein (3) dans la moitié de bague de friction (2') lorsqu'une uniformité de formes est obtenue entre le côté intérieur de la moitié de bague de friction (2') présentant un ajustement et la collerette de nacelle de disque de frein (9), vue dans la direction axiale du disque de frein (1), sur le côté intérieur de la moitié de bague de friction (2') présentant un ajustement ;
- alésage des premiers et deuxièmes alésages (16, 17), au moins respectivement dans une passe d'usinage pour chaque paire d'alésages constituée d'un premier et d'un deuxième alésage (16, 17) et en particulier également du canal de sortie d'air de refroidissement (15) ;
- introduction respectivement d'un moyen de liaison dans chaque paire d'alésages constituée d'un premier et d'un deuxième alésage (16, 17).

16. Procédé de fabrication d'un disque de frein selon la revendication 15, **caractérisé en ce que** les moyens de liaison sont des douilles de serrage (8) qui, après leur introduction dans chaque paire d'alésages (16, 17), y sont matées.
